# EUROPEAN PATENT SPECIFICATION

(11) **EP 3 948 261 B1**
(45) Date of publication and mention of the grant of the patent: **05.11.2025**
(21) Application number: 20718597.6
(22) Date of filing: 03.04.2020
(51) Int. Cl.: G01N 30/60, B01D 15/22, G01N 30/02, G01N 30/06

(54) **METHOD AND DEVICE FOR SAMPLE PREPARATION**
VERFAHREN UND VORRICHTUNG ZUR PROBENVORBEREITUNG
PROCÉDÉ ET DISPOSITIF POUR LA PRÉPARATION D'ÉCHANTILLONS

(30) Priority: 05.04.2019 EP 19167592
(43) Date of publication of application: 09.02.2022
(73) Proprietor: Biotage AB, 751 03 Uppsala (SE)
(72) Inventor: WILLIAMS, Lee, Gwent NP10 9NJ (GB); GJERDE, Douglas T., Saratoga, California 95070 (US); DAVIES, Geoff, Gwent NP10 9JU (GB); HOANG, Lee, Santa Clara, California 95051 (US); THOMPSON, James, Glamorgan CF72 9LS (GB)
(74) Representative: Brann AB
(86) International application number: PCT/EP2020/059549
(87) International publication number: WO 2020/201503

(56) References cited:
- US-A1- 2004 142 488
- US-A1- 2004 142 488
- US-A1- 2018 238 842
- US-A1- 2018 238 842
- US-A1- 2018 252 687
- US-A1- 2018 252 687

## Description

### Technical Field

The present invention relates to the area of separation, such as recovery of analytes, and provides tools and methods for making sample preparation more efficient. More specifically, the invention relates to a microelution column; a plate including one or more such columns; and a sample preparation method that enables the use of smaller elution volumes.

### Background of the invention

Microelution techniques were developed primarily to address the need for a reduction in solvent use, and also in the size of extraction instrumentation. Typically, in such methods, the volume of the extracting phase is very small in relation to the volume of the sample, washing buffer and elution buffer.

Most commercially available microelution type plate products operate with elution volumes of 50 µL and larger. Often elution volumes are applied in two equal aliquots to recover materials from bed mass of 2 and 5 mg of material. One reason large elution volumes are used is to prevent low and/or inconsistent recovery of the analyte species from the column beds of the plate. There are several causes of low or inconsistent recovery. The column may channel due to non-uniform bed packing. Liquid flow may channel through the bed of the column leaving resin in the column or portions of the bed incompletely reacted untouched by sample, washing and/or elution solutions. Poor or inconsistent flow in any of these steps may require large buffer volumes, especially in the washing and elution steps, to ensure that all column media is contacted and reacted by the solvents/buffers. As the column bed size is decreased, uniformity of the packed bed is more difficult to achieve.

Any column used in top-down flow of a microelution column may contain air trapped or partially trapped in the bed of the column. In fact, this is an artefact on how plates operate and is part of standard practice. Air may unintentionally be introduced simply by the continuous top pressure, or bottom vacuum, applied to the column even after liquid has exited the bed.

Another way that air is unintentionally introduced to an adsorbent bed is by an air gap process. An "air gap" is the air trapped between the top of the column bed and the slug of liquid introduced to the top of the column bed. With an air gap present, as the liquid on top of the air gap is forced through the column by pressure at the top of the column bed or vacuum at the bottom of the column, air will be forced through the column bed. This may result in air being partially and unpredictable retained in the column bed.

This kind of undesired air in the column bed is known as entrained air. Air may be introduced in any of the liquid flow steps of conditioning, sample loading, sample washing or sample elution. Air in the bed can interrupt the flow of liquid so that flow through the column is neither consistent nor predictable, e.g. due to channeling of the flow. It can also change the flow rate of liquid flowing through the column. A plate based column may contain large dead volumes that must be cleared with the introduction of any buffer step. In this situation, large elution volumes will be required to give multiple chances of eluting and recovering the analytic species of interest while smaller elution volumes result in low recovery of material and also an inconsistent from column-to-column recovery of materials.

In the field of sample preparation, there exists a need to improve consistency of recovery as well as the mass recovery of analytes from plate type solid phase extraction columns. There is also a need for small elution volumes while maintaining complete mass recovery of the analyte from the resin in the plate type columns. As explained above, there exists a need to reduce the amount of entrained air in the column beds of a plate, and there is a need to avoid introducing air into the column beds of a plate. Finally, there exists a need to avoid the air gap when introducing liquid into the column beds of a plate.

WO 2005/070141 (Phynexus, Inc.) relates to extraction columns for the purification of an analyte, such as a peptide, protein or nucleic acid. The described columns may be characterized by low backpressure in use, and in some embodiments, it is stated that elution of analyte in a small volume of liquid may be obtained.

The column bodies may be made from a wide range of materials, such as plastic, glass, ceramics or metals. Further, the extraction columns include one or two frits, such as membrane screens, which may be characterized by low pore volume. The polarity of the membrane screen can be important - a hydrophilic screen will promote contact with the bed and promote the air-liquid interface setting up a surface tension; while a hydrophobic screen would not promote surface tension and therefore the threshold pressures to flow would be different.

US 4,779,467 (Rainin Instruments Co., Inc.) relates to a liquid-end assembly for multichannel air-displacement pipettes having a modular construction, which enables individual components to be easily replaced when they become contaminated or worn. The assembly also enables selected piston and cylinder components to be selectively removed so that a number less than all of the channels can be employed for pipetting without first stabbing tips and then removing by hand or rearranging the tip array. More specifically, this is achieved by the liquid-end assembly further comprising modular piston means comprising a cylindrical rod having a first end and a second end, wherein the piston means comprises spring capturing means disposed proximate the first end of the rod.

US 2018/0252687 (Tecan) relates to microcolumns for extraction of an analyte from a liquid sample, and particularly extraction of an analyte from biological fluids. More specifically, an objective of US 2018/0252687 is to provide an extraction device which improves process throughput, removes a very high percentage of an analyte from a sample, is transportable, storable without damage, and inexpensive. It is also desirable that such device be compatible with existing automated equipment, and not leach into the biological or other fluid samples the eluent liquid or any compound that could interfere with the analytical results. Likewise, it is desirable to minimize the media bed volume and associated dead volumes to lower the volume of the wash eluent liquid.

According to US 2018/0252687, this can be achieved by an apparatus comprising a first microcolumn comprising a first passage, a flow distributor layer extending across the first passage; and a second microcolumn comprising a second passage, an extraction layer extending across the second microcolumn; wherein, the first microcolumn positioned above and in series with the second microcolumn with the first passage in fluid communication with the second passage.

US 2018/0238842 (Showa Denko) relates to a liquid chromatographic column and a liquid chromatographic apparatus including the same. More specifically, according to US 2018/0238842, an example of problems related to continuous use is that the filter of a column may become clogged with an injected sample component or impurities injected with the sample component, and pressure applied to the system may exceed the limit of an apparatus, which leads to analysis failure.

In order to deal with such problems, US 2018/0238842 describes a liquid chromatographic column comprising a cylindrical column body; an inflow-side filter that is disposed at an eluent inflow-side end of the column body; an outflow-side filter that is disposed at an eluent outflow-side end of the column body; and a filler that is filled between the inflow-side filter and the outflow-side filter, wherein the inflow-side filter has a two-layer structure consisting of a first resin filter member and a second resin filter member which are disposed in this order from a side of the filler, and the first resin filter member has an indentation elastic modulus lower than that of the second resin filter member.

US 2004/142488 A1 discloses extraction columns for the purification of an analyte (e.g., a biological macromolecule, such as a peptide, protein or nucleic acid) from a sample solution, as well as methods for making and using such columns.

US 2018/252687 A1 discloses an apparatus for extracting an analyte from a liquid sample having a container with an entrance, an exit, and a passage therebetween for passage of a liquid sample containing an analyte, the container having a full diameter bed region and a reduced diameter bed region.

US 2018/238842 A1 discloses liquid chromatographic column includes: a cylindrical column body; an inflow-side filter that is disposed at an eluent inflow-side end of the column body; an outflow-side filter that is disposed at an eluent outflow-side end of the column body; and a filler that is filled between the inflow-side filter and the outflow-side filter, in which the inflow-side filter has a two-layer structure consisting of a first resin filter member and a second resin filter member which are disposed in this order from a side of the filler, and the first resin filter member has an indentation elastic modulus lower than that of the second resin filter member.

Despite the products and art available, there is still a need in the area of sample preparation, and specifically in the area of solid phase microelution, for more efficient methods allowing fast analysis with as little use of liquids and reagents as possible, especially in automated parallel processing of multiple samples.

### Summary of the invention

One aspect of the invention is a microelution column comprising a column body including a bottom frit and a top frit, wherein the column body includes adsorbent arranged between the bottom frit and the top frit, and an optional filter frit arranged above the top frit, wherein the top frit and/or the bottom frit has a pore volume of about 0.2 µL. Further, the pore diameter of the bottom frit is smaller than that of the top frit.

Another embodiment of the invention is a microelution column comprising a column body including a bottom frit and a top frit, wherein the column body includes adsorbent arranged between the bottom frit and the top frit, without the presence of a filter frit.

Another aspect of the invention is a plate for parallel processing of samples, which includes a plurality of positions into which one or more columns according to the invention have been arranged.

A further aspect of the invention is a method of preparing a sample for subsequent analysis, wherein an aliquot of elution solvent in the range of 1-50µl is applied to the top of the column according to the invention.

Further details, advantages and embodiments of the present invention will appear from the dependent claims as well as from the detailed description below.

### Brief Description of the Drawings

Figure 1 shows a single microelution column 1 according to the invention including a bottom frit 3 and a top frit 4, and an adsorbent 5 arranged between the bottom frit 3 and the top frit 4. An annular ridge 7 arranged to enable its positioning in a Y-direction in the plate 10 appears clearly, while the general positioning of means 12 arranged to receive said annular ridge 7 of each column is indicated by an arrow.
Figure 2 shows a single microelution column 1 according to the invention, which in addition to the features described in Figure 1 also shows an optional filter frit 6.
Figure 3a-b show a microelution column 1 according to the invention in two different perspectives, including a collar 8 and flat surfaces 9.
Figure 4a-c show a plate 10 according to the invention in three different perspectives, including a plurality of positions 11 arranged to receive one or more columns 1 according to the invention.
Figure 5a-b show a plate 1 according to the invention by an illustrative side view (Figure 5a) and an illustrative top view (Figure 5b).
Figure 6 illustrates how buffer may be applied to the top of a column 1 according to the invention with column wall 13 (here hydrophilic), and hydrophilic top frit 4. A buffer dispenser tube 14 is shown.
Figure 7 illustrates how buffer may be applied to top of the column 1 according to the invention with column wall 13 (here hydrophobic), and hydrophilic top frit 4, where the diameter of the buffer droplet 15 is less than the diameter of the column body 2 above the top frit.
Figure 8 illustrates the column described in Figure 7, where the droplet 15 now touches the top frit 4. The droplet flows along the inner wall of the column and covers the top of the top frit 4.
Figure 9 illustrates the analyte recovery performance obtained according to the example 4b, comparing 2 mg LVF column with a traditional 10 mg fixed well plate.
Figure 10 illustrates the relative standard deviation (RSD) performance obtained according to the example 4b, comparing 2 mg LVF column with a traditional 10 mg fixed well plate.
Figure 11 illustrates the analyte recovery performance obtained according to the example 4c, comparing minimum elution volumes for the 2 mg LVF column format.
Figure 12 illustrates the relative standard deviation (RSD) performance obtained according to the example 4c, comparing minimum elution volumes for the 2 mg LVF column format.
Figure 13 illustrates the analyte peak area performance obtained according to the example 4d, comparing 2 mg LVF column with a traditional 10 mg fixed well plate.
Figure 14 illustrates the analyte peak area performance obtained according to the example 4d, comparing 2 mg LVF column with a traditional 10 mg fixed well plate.
Figure 15 illustrates the analyte peak area performance obtained according to the example 4d, comparing 2 mg LVF column with a traditional 10 mg fixed well plate.
Figure 16 illustrates the analyte peak area performance obtained according to the example 4d, comparing 2 mg LVF column with a traditional 10 mg fixed well plate.

### Definitions

The term " microelution" is used herein in its broadest sense including small volume elution from extraction columns as the final step to recover desired materials.

The term "column" is used herein in its conventional meaning in the area of sample preparation that is a chamber arranged to receive an adsorbent.

The term "adsorbent" is used herein include a material whereby material are adsorbed to a solid phase media, normally a higher surface material. Adsorbent is sometimes referred to as the bed, or a resin.

The term "frit" as used herein in its conventional meaning in the area of sample preparation, i.e. for a porous material arranged for holding extraction media in place in a column. The frits are sometimes referred to herein as 'screens'.

The term "filter frit" as used herein is a screen, membrane or frit material positioned above the inlet frit to remove particulate material from the liquid entering the column bed.

The term "solid phase extraction" as used herein is defined as a sample preparation process by which compounds that are dissolved or suspended in a liquid mixture are separated from other compounds in the mixture by adsorption to column media according to their physical and chemical properties.

The term "elution volume" as used herein is defined as the volume of elution liquid, sometimes known as desorption liquid, into which the analytes are desorbed and collected.

The term "biomolecule" as used herein refers to molecules derived from a biological system, such as proteins, peptides, and nucleic acids.

### Detailed Description of the Invention

As appears from the above, the present invention relates to a method and an apparatus for the low i.e. small volume elution and recovery of materials e.g. from a solid phase extraction plates.

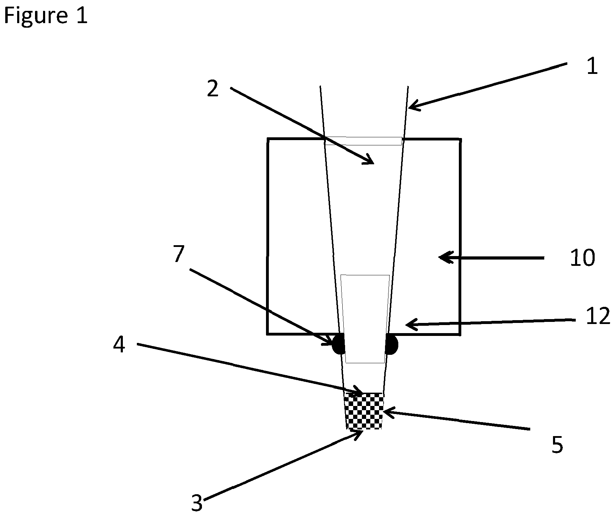

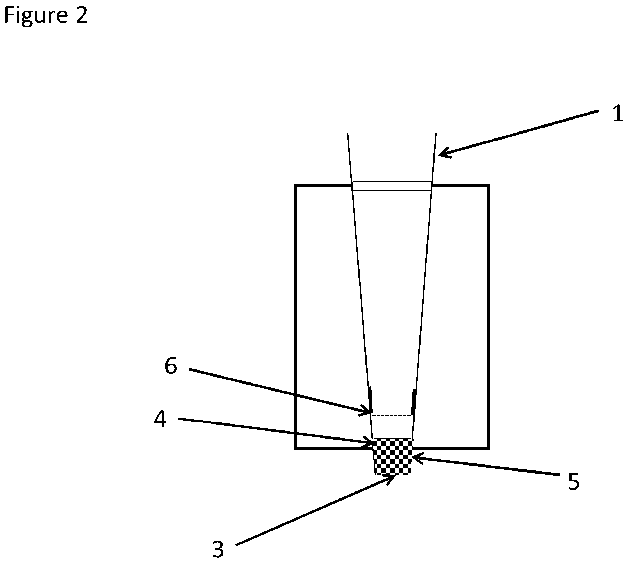

In a first aspect, as exemplified e.g. in Figures 1 and 2, the invention relates to a microelution column 1 comprising a column body 2 including a bottom frit 3 and a top frit 4, wherein the column body 2 includes an adsorbent 5 arranged between the bottom frit 3 and the top frit 4, and the option of a filter frit 6 arranged above the top frit. The column is a flow-through column, where liquids are added at the top and liquids exit at the bottom.

The columns of the invention are advantageously used in a plate format, advantageously for parallel processing in a top-down flow format when arranged in the plate. Thus, the flow through such a column of the invention will be applied from the top to the bottom.

Though not part of the claimed subject-matter, the columns may used as pipette tip columns, for example in a back and forth flow tip column format or in conventional pipetting.

To improve their use in the plate format, as exemplified e.g. in Figure 1, the columns according to the invention may include means that prevents its movement in Y-direction, such as an annular ridge 7 or other protrusion arranged to receive a supporting part of the well of the plate 10.

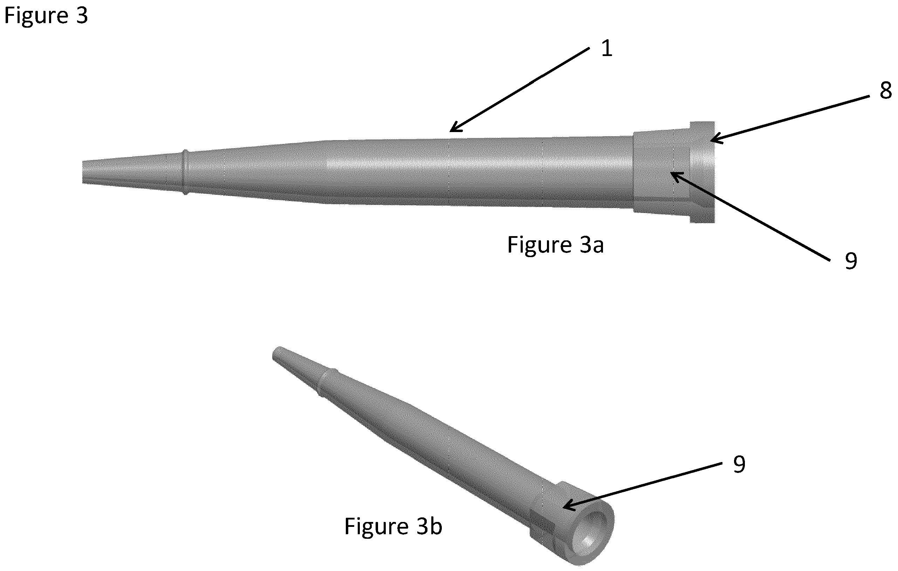

Further, to prevent or at least substantially reduce its movement in X-direction when arranged in a plate, as exemplified e.g. in Figure 3, the column according to the invention may include a collar 8 arranged at the upper part of the column body which includes at least two opposing flat surfaces 9, such as four flat surfaces i.e. two pairs of opposing surfaces.

Advantageously, the adsorbent 5 has been loaded in a volume that substantially avoids or at least minimizes void volume below the top frit 4, i.e. between the top frit and the adsorbent 5. Differently worded, in order to avoid the above-discussed problem of air entrainment, the loading of the adsorbent into the space between the bottom frit 3 and the top frit 4 is performed to minimize any free space or air. Thus, the adsorbent 5 is may be provided as a packed bed, rather than a fluidized bed. In one embodiment, the present invention does not allow free movement of adsorbent particles below the top frit 4; or at least substantially reduces any such movement to degree which has no impact on the column performance.

The bottom frit 3 may be of low porosity, such as the frits described in the above-discussed WO 2005/070141. In some embodiments, the pore volume of the frits may be 0.2 µL and smaller. Further, the bottom frit 3 may be water-wettable, i.e. substantially hydrophilic. To enable advantageous addition of sample, as will be discussed in more detail below, the top frit 4 may be water-wettable, i.e. substantially hydrophilic. The column body 2, or at least the inside of the column body, may be hydrophobic, or at least substantially hydrophobic. However, as an alternative that changes certain properties and performance, the inside of the column body 2 may be water-wettable i.e. substantially hydrophilic.

A column according to the invention **is** configured for top-down column flow, in which case the filter frit 6 is configured to enable the removal of large particles such as contaminants originating from biological samples. In this context, it is understood that the term top-down flow is understood to mean the position of the column in conventional use in a plate, or as a pipette tip.

As appears from Figures 1 and 2, the bottom and top frit serve to contain the bed of adsorbent 5. The optional additional filter screen removes material in samples preventing plugging of the column bed. In some embodiments, there is a 0.1-20 mm gap between the filter frit and top frit of the column. In some embodiments, the gap is between 0.5 mm and 10 mm. In some embodiments, the gap between the top frit and filter frit is 0.5, 1, 2, 4 and 5 mm.

In columns of the invention, the dead volume (i.e. the interstitial volume of liquid held in the filter pores) of the filter frit is in the range of 0.05µl - 5µl. In some embodiments, the dead volume is in the 0.05µl - 2 µl. In some embodiments, the dead volume is in the 0.1 µl - 1 µl.

The skilled person may select suitable porosity and other dimensions of the bottom, top and filter frit depending e.g. on the nature of the sample and the purpose of the microelution.

In another aspect of the invention, the invention relates to a plate 10 suitable for parallel processing of samples, which includes a plurality of positions 11 into which one or more of the columns according to the invention have been arranged.

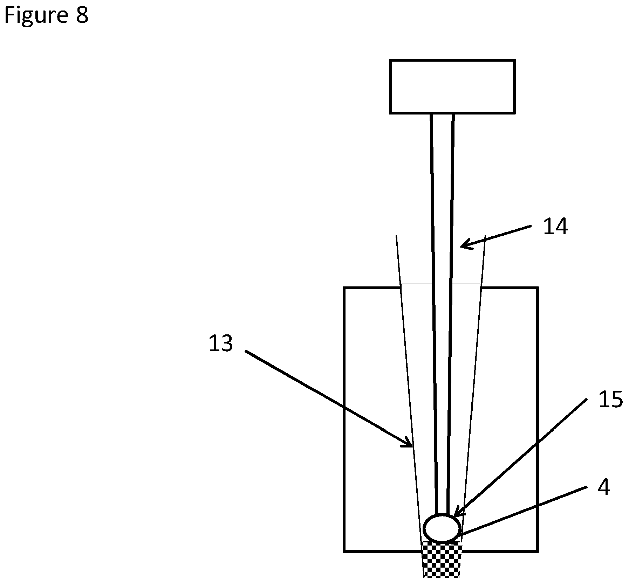

Advantageously, each well of such a plate will comprise means 12 to engage with the annular ridge 7 of each column. Further, the plate of the invention may comprise means arranged to receive two or more flat surfaces 9 arranged in the upper part of each column, such as in or with a collar 8, as exemplified in Figure 8. Thus, the plate may be squared in a fashion that fits the flat surface(s) of the column collars.

As appears from the above, the plate of the invention may be an interchangeable plate with optional removable pipette tip columns. The plate of the invention may be constructed to receive a plurality of columns arranged in parallel where the columns may be removed and used as tip columns. In one embodiment, the plate operates in a 96 column format in an 8x12 row configuration. Microelution of columns of the plates may be accomplished by controlling the frit polarity and plastics.

As discussed briefly above, the columns of the invention may be a combination of components that include water-wettable screen frits and optional water wettable polymer wall. In some embodiments of the invention non water wettable polymer screen frits may be used including polyethylene terephthalate (PET), polypropylene (PP), polyether ether ketone (PEEK), polyethylene naphthalate (PEN), polytetrafluoroethylene (PTFE), polyvinylidene fluoride (PVDF), polybutylene terephthalate (PBT) and others.

The frits of the invention have pore size and porosity. The pore size or pore diameter is the effective opening in the frit that will allow materials of the defined pore size to pass through or mostly pass through the frit. The frit is constructed with polymer threads or other polymer material causing these areas to be closed i.e. not porous. The porosity of the frit is defined by the amount of open area of the frit from the pores divided by the total area multiplied by 100.

According to the invention, the pore size or diameter of the bottom outlet frit is smaller than the top or inlet frit. It was discovered that samples containing particulate material could plug the frits and flow through the column would be limited or stopped. Sample particles that were larger than the top frit pore size would remain on top of the column bed. However, sample particles that were smaller than the pore size of the top frit would pass through and may lodge in the column. If the particles lodged in the pores of the bottom frit, flow through the column could be reduced and even stopped. In some embodiments of the invention, it was discovered that particles from the sample that passed through the top frit could be prevented from plugging the column by decreasing the pore size of the bottom frit relative to top frit. In these samples, particles that passed through the column would not lodge or plug the lower outlet frit and flow would not be impeded.

The columns are constructed and used to avoid air gaps with the introductions of liquids, especially low volume liquids to the top of the column. If air becomes entrained in the column, hydrophilic frits on both ends of the column and low dead spaces within the column allow the expulsion of much of the air with the introduction of the next liquid volume. The plate is a true low volume plate format that can optionally be a flexible plate/tip format. More than 90% of the elution volume introduced into the column bed may be recovered, even with elution volumes less than 50, 45, 40, 35, 30, 25, 20, 15 and even 10 µL for a 2 mg mass column bed. More than 90% of the elution volume introduced into the column bed may be recovered, even with elution volumes less than 50, 45, 40, 35, 30, 25, 20, 15, 10 and even 5 µL for a mass column bed in the range of 0.2 - 2 mg. More than 90% of the elution volume introduced into the column bed may be recovered, even with elution volumes less than 50, 45, 40, 35, 30, 25 and even 20 µL for a mass column bed in the range of 2 - 20 mg.

The bed mass of columns located in the columns of the plate may be in the 2, 5, 10 or 20 mg range. The bed mass of columns located in a 96 column plate may be in the 0.1 - 10 mg and the 0.2 - 5 mg ranges.

Columns of the invention allow the removal of air gap so that introduction of air in the column bed can be avoided. In one embodiment this is accomplished by the frit and column wall being hydrophilic so that liquid added slides down the wall and the column and covers the frit not allowing air to enter the column bed. In another embodiment this is accomplished by having a hydrophilic frit and dropping liquid into the bed where the diameter of the drop is less than the diameter of the column above the frit. In another embodiment this is accomplished by depositing the drop of liquid so that the bottom of the drop touches and covers the hydrophilic frit.

In a further aspect, the invention relates to a method of preparing a sample for subsequent analysis, wherein at least one sample having a volume in the range of 100-400µl is applied to a column according to the invention.

Low or micro elution volumes are possible with plates of the invention. Thus, the sample may applied to a column 1 loaded with adsorbent 5, and elution may be performed in a subsequent step by applying an eluent having a volume in the range of 1-50 µl. For example, columns in the mass weight of 2 - 5mg of adsorbent weight may be eluted in elution volumes of 50 µL and below, where the ratio of elution volume / recovery volume is in the range of 0.9-1.0.

The method is a top-down column flow method, wherein the sample is applied to filter frit 6.

Although not part of the claimed subject-matter, the method may be a pipetting method, wherein the sample is aspirated and passes the bottom frit 3 to contact the adsorbent 5 arranged between the bottom frit 3 and the top frit 4.

In some embodiments, high pressure is used to force liquid through the column in the plate. This high pressure serves to remove entrained air that may be contained in the bed thus improving the contact of liquids to the media contained in the column beds. However, high pressures also serve to increase dramatically the liquid flow rate and the linear velocity of liquid through the bed. Pressures of 14-210 kPa, 21-170 kPa, 28-140 kPa, 34-100 kPa and 34-69 kPa may be used in plates of the invention while retaining capture of the molecules to the solid phase media. It is surprising that these high pressure ranges can be used in the column plates of the invention because high linear velocity normally will limit capture of molecules due to slow capture kinetics.

In one embodiment of the invention, columns and plate of the invention with columns in the sorbent mass weight range of 2 - 5 mg for an individual column bed; elution may be performed with less than 50 µL elution volumes with recoveries of analytes in the 90 - 100 % range. In another embodiment of the invention, for elution volumes less than 50 µL the ratio of applied elution volume / recovered volume is in the range of 0.9 - 1.0. In another embodiment of the invention, for elution volumes less than 50, 45, 40, 35, 30, 25, 20 and 15 µL the ratio of applied elution volume / recovered volume is in the range of 0.9 - 1.0. Less than 50 µL elution volumes applied to the top of the columns in the plate of the invention allow complete flow of the volume bed and is not trapped by dead spaces that may be contained within the column bodies, beds or frits. Surprisingly, even with entrained air in the bed of the columns of the invention, these small elution volumes can be used and recoveries up to 90-100% may be achieved.

The columns are designed to be able to add elution volumes of less than 50, 40, 30, 25, 20, 15, 10 and 5 µL to the top frit of the column without introducing an air gap to the top of the column.

The plate containing columns may be configured into an 8 x 12 (96 column) format but the plate is not limited to this configuration. Plates of the invention can have any number of rows and columns. The plate can be processed in a 96 well plate type format. In some embodiments of the invention, the columns may not be removed from the plate format. In some embodiments, the tip columns may be removed from the plate and can be processed in 1 - 2, 1 - 4, 1 - 8, 1 - 12 or 1 - 96 pipette pump format. Pipette tip column from the plate of the invention may be process in 2, 4, 8 multichannel pipette format. In some terminology columns may be referred to as wells or column wells within a plate format. However, the column well must retain the format having a bottom or outlet frit, a top or inlet frit and media contained within these two frits.

The elution volumes may be as low as 25 - 50 µL, 20 - 50 µL, 15 - 50 µL or the 10 - 50 µL range. Elution volumes may be added in one aliquot. The elution volume (EV) in µL to bed mass (BM) in mg ratio (the EV:BM ratio) may be less than 25, 20, 15, 10, 5, 4, 3, or 2 for column bed mass of 20, 15, 10, 5, 4, 3, 2, 1 and 0.5 mg. Surprisingly smaller mass beds in the plate and column of the invention can accommodate smaller EV:BM ratios as the bed mass is decreased. This is the opposite of would be expected by someone skilled in the art.

In some embodiments, the column beds are expressed in volume rather than mass. In this case, the elution volume (EV) in µL to bed volume (BV) in µL ratio (the EV:BV ratio) may be less than 10, 5, 4, 3, or 2 for column bed volumes of 50, 40, 30, 20, 15, 10, and 5 µL. Similarly, small volume beds in the plate and column of the invention can accommodate smaller EV:BV ratios as the bed volume is decreased.

The columns are removable from the plate.

The columns are designed to be able to add elution volumes of less than 50, 40, 30, 25, 20, 15, 10 and 5 µL to the top frit of the column without introducing an air gap to the top of the column.

The plate is configured into an 8 x 12 format but is not limited to this configuration. It can have any number of rows and columns. The plate can be processed in a 96 well plate type format or tip columns from the plate can be process in 1 - 2, 1 - 4, 1 - 8, 1 - 12 or 1 - 96 pipette pump format. Tips removed from the plate may be process with multichannel pipette heads in the 2, 4, 8 and 12 channel pipette format.

The placement of the end of the column (or bottom frit) relative to the bottom of the collection well is within about 5 mm of the bottom of a 350 µL collection plate thus avoiding splashing, aerosol formation due to high flow rates.

The diameter of top frit and elution frits for 96 column plate is in the range of 0.1 to 4 mm and in the range of 1 to 2 mm.

The columns can be sealed into plate format with an annular ridge while individual tip columns are also removable from the plate.

Plate solid phase extraction with a 5 mg or less bed mass where the sample addition is performed using a filtration aid.

The optional modular dual column format used tip columns that are compatible with 96 at a time plate format and a 1-96 pipette tip column format having:
a) annular ridge on column body to seal column into plate;
b) flat edges at top of columns to restrict movement of the column top in the plate;
c) where columns may be removed from plate and with pipetting head.

A sample prepared by a method according to the invention may be further analysed in a subsequent step e.g. by mass spectrometry, such as by LC-MS or LC-MS/MS.

### Detailed Description of the Drawings

Figure 1 shows a single microelution column 1 according to the invention including a bottom frit 3 and a top frit 4, an adsorbent 5 arranged between the bottom frit 3 and the top frit 4. The ridge 7 arranged to enable its positioning in a Y-direction in the plate appears clearly. The column 1 may be permanent or optionally removable from its plate and used as a pipette tip column. The average diameter of the small mass column may be in the range of 1 - 4 mm, as discussed in further detail in the section Detailed description above.
Figure 2 shows a single microelution column according to the invention, which in addition to the features described in Figure 1 also shows an optional filter frit 6. The filter frit 6 may have different size opening to filter large particles contained in samples preventing plugging of the tip column.
Figure 3a-b show a microelution column according to the invention, including the collar 8 and flat surfaces 9.

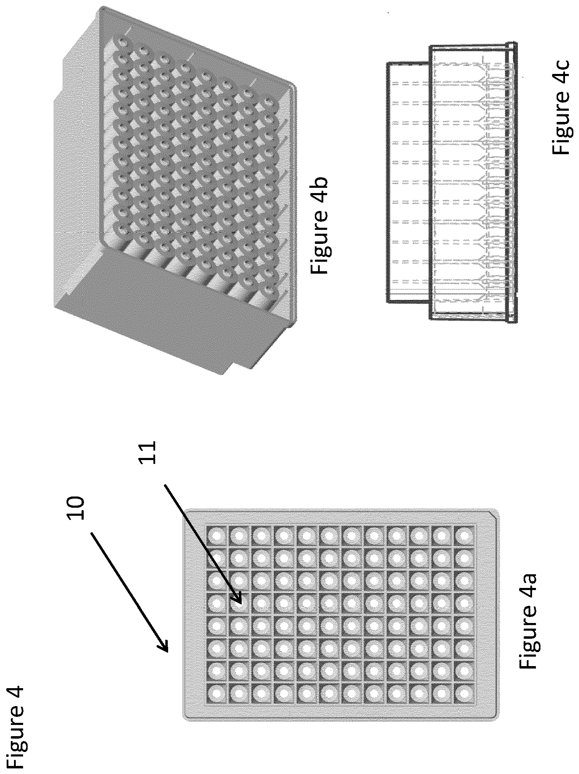

Figure 4a-c show a plate 10 according to the invention, including means **11** arranged to receive the ridge 7.

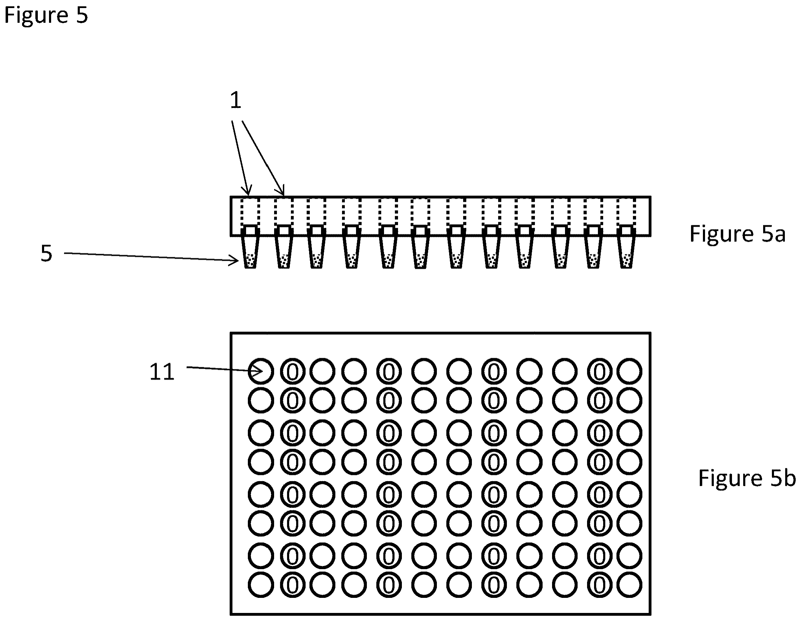

Figure 5a-b show a plate 10 according to the invention by an illustrative side view (Figure 5a) and an illustrative top view (Figure 5b). The plate shown is arranged for loading, washing and elution of column by top down column flow. Air may be prevented from entering the column bed when using small elution volumes. The columns 1 may be embedded into the plate; or they may be removable. The optional modular dual column format uses tip columns that are compatible with 96 at a time plate format and a 1-96 pipette tip column format having and annular ridge 7 on column body 2 to seal each column 1 into the plate 10. Flat surfaces may advantageously be arranged at the top of each column 1 to restrict the movement in X-direction of the columns in the top of the plate 10.

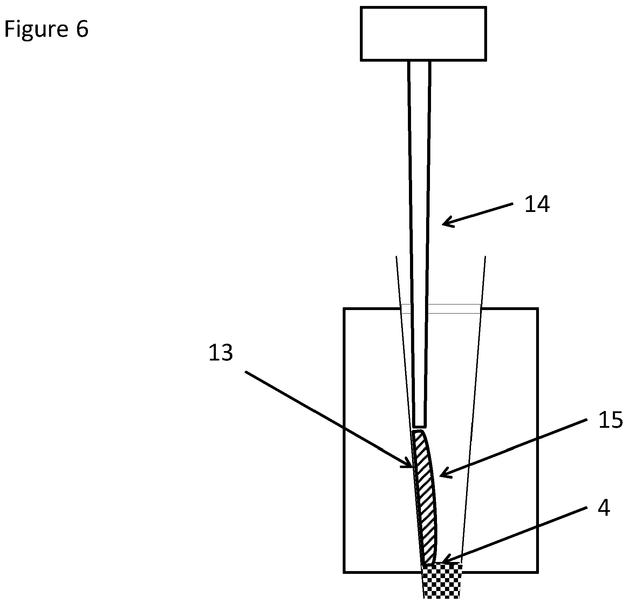

Figure 6 illustrates how buffer may be applied to the top of a column 1 according to the invention with wall 13, here hydrophilic, and hydrophilic top frit 4. Buffer is applied to the top of the column 1 with hydrophilic wall and hydrophilic top frit 4. The droplet 15 will travel down the side of the column wall to prevent the formation of an air gap between the aliquot of liquid and the top of the column. The droplet touches and covers the hydrophilic top frit 4.

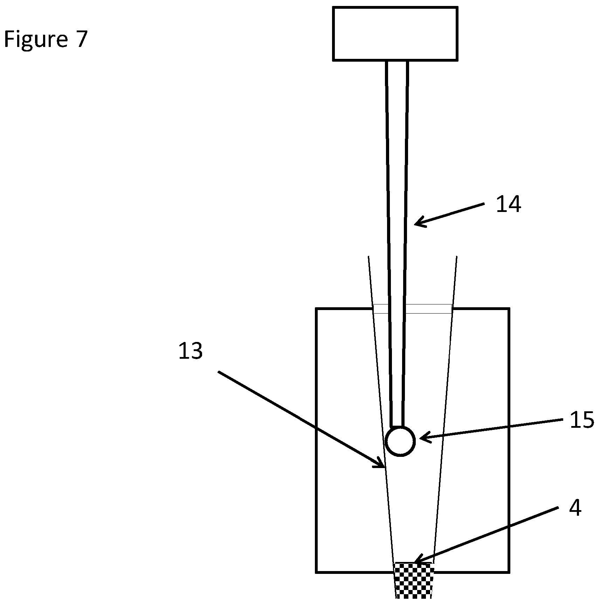

Figure 7 illustrates how buffer may be applied to top of the column 1 according to the invention with wall 13, here hydrophobic, and hydrophilic top frit 4, where the diameter of the droplet 16 is less than the diameter of the column above the top frit 4. Buffer is applied to top of the column with hydrophobic wall and hydrophilic top frit 4 where the diameter of the droplet 15 is less than the diameter of the column above the frit. The droplets 15 are formed as liquid is applied to the top of the column. The droplets 15 do not touch the walls to form an air gap.
Figure 8 illustrates how buffer may be applied to the top of the column 1 according to the invention with wall 13, here hydrophobic, and hydrophilic top frit 4 where the droplet 15 touches the top frit 4. The droplet flows along the wall of the column and covers the top of the top frit 4. Buffer is applied to the top of the column with wall 13 and hydrophilic top frit 4 where the droplet touches the frit. The droplet 15 covers the top of the top frit 4 and top of the adsorbent 5. An air gap is not formed. The dispensing tube 14 may be raised as the liquid is dispensed.

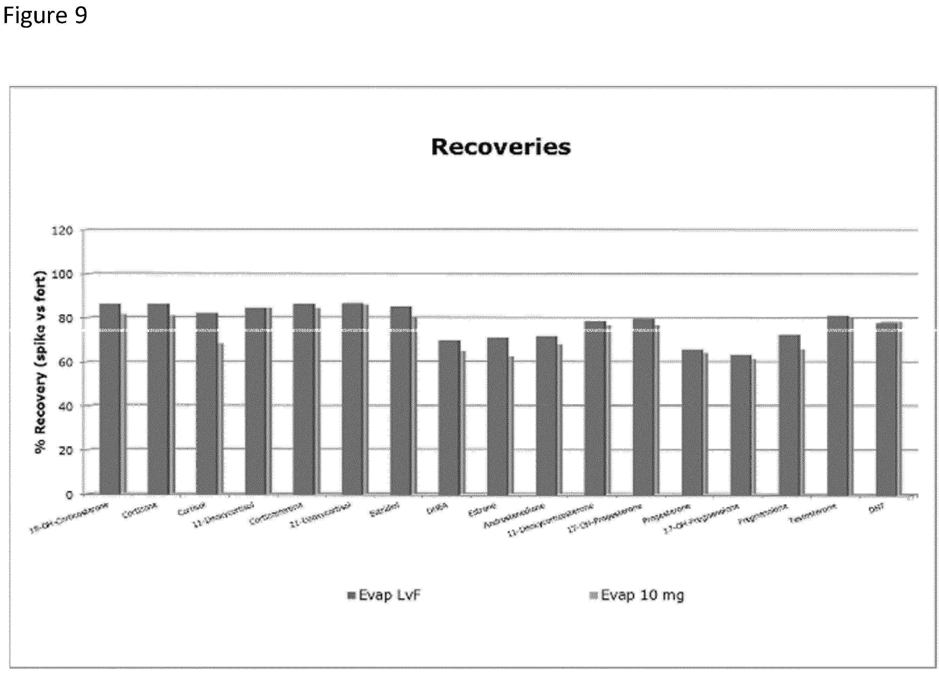

Figure 9 illustrates the analyte recovery performance obtained according to the example 4b, comparing 2 mg LVF column with a traditional 10 mg fixed well plate. More specifically analytes are ordered from left to right on the x-axis: 18-hydroxycorticosterone, cortisone, cortisol, 11-deoxycortisol, corticosterone, 21-deoxycortisol, estradiol, DHEA, estrone, androstenedione, 11-deoxycorticosterone, 17-hydroxyprogesterone, progesterone, 17-hydroxypregnenolone, pregnenolone, testosterone, DHT: with % recovery plotted on the y-axis. For the given analyte set recovery comparison are equivalent between the two formats, delivering recoveries > 60% for all targets.

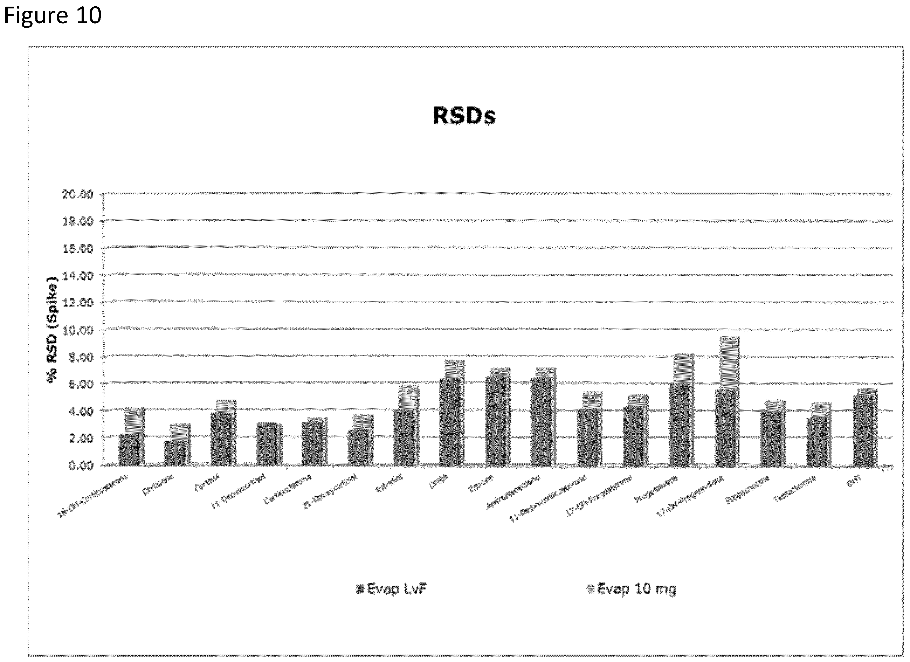

Figure 10 illustrates the relative standard deviation (RSD) performance obtained according to the example 4b, comparing 2 mg LVF column with a traditional 10 mg fixed well plate. More specifically analytes are ordered from left to right on the x-axis: 18-hydroxycorticosterone, cortisone, cortisol, 11-deoxycortisol, corticosterone, 21-deoxycortisol, estradiol, DHEA, estrone, androstenedione, 11-deoxycorticosterone, 17-hydroxyprogesterone, progesterone, 17-hydroxypregnenolone, pregnenolone, testosterone, DHT: with % RSD plotted on the y-axis. For the given analyte set RSDs are better for the 2 mg LVF format in all but 1 case. Both formats deliver RSDs below 10% for all analytes. This illustrates data repeatability as presented according to example 4b.

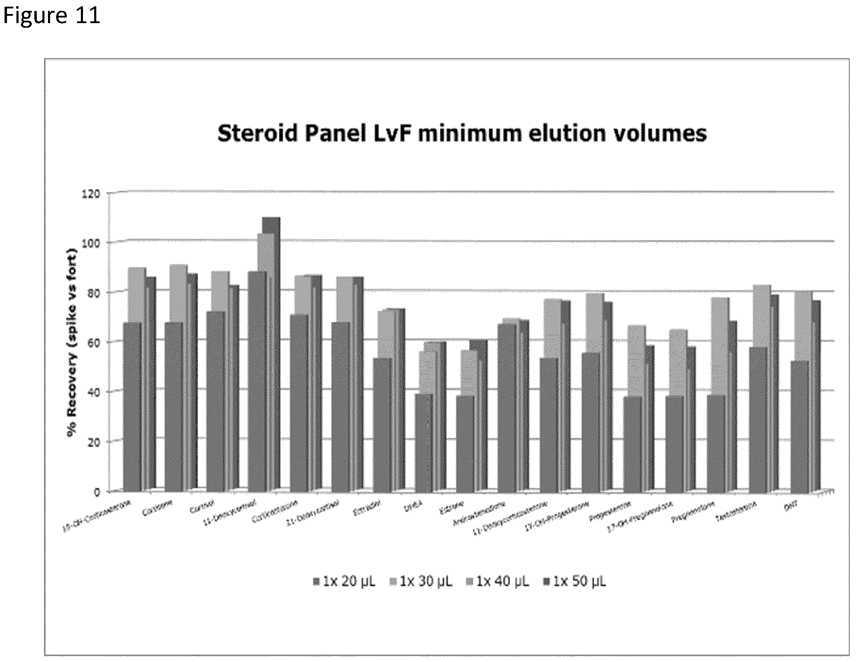

Figure 11 illustrates the analyte recovery performance obtained according to the example 4c, comparing minimum elution volumes for the 2 mg LVF column format. More specifically analytes are ordered from left to right on the x-axis: 18-hydroxycorticosterone, cortisone, cortisol, 11-deoxycortisol, corticosterone, 21-deoxycortisol, estradiol, DHEA, estrone, androstenedione, 11-deoxycorticosterone, 17-hydroxyprogesterone, progesterone, 17-hydroxypregnenolone, pregnenolone, testosterone, DHT: with % recovery plotted on the y-axis. Generally acceptable recoveries are obtained with elution volumes as low as 20 µL. However, 30 µL elution volumes demonstrate increased recovery and equivalent performance up 50 µL. This demonstrates that this analyte panel can be eluted with as low as 30 µL without deterioration of results.

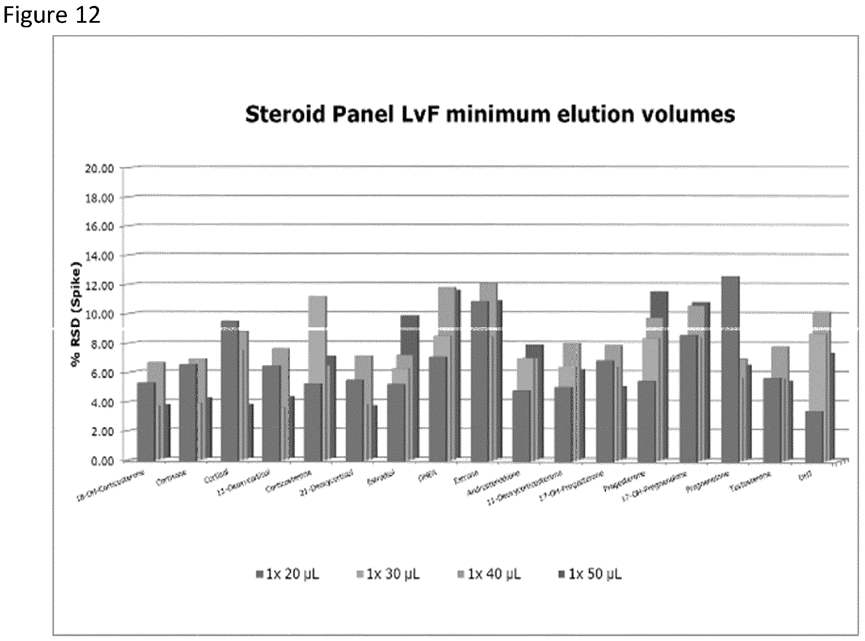

Figure 12 illustrates the relative standard deviation (RSD) performance obtained according to the example 4c, comparing minimum elution volumes for the 2 mg LVF column format. More specifically analytes are ordered from left to right on the x-axis: 18-hydroxycorticosterone, cortisone, cortisol, 11-deoxycortisol, corticosterone, 21-deoxycortisol, estradiol, DHEA, estrone, androstenedione, 11-deoxycorticosterone, 17-hydroxyprogesterone, progesterone, 17-hydroxypregnenolone, pregnenolone, testosterone, DHT: with % RSD plotted on the y-axis. All elution volumes deliver RSDs below 13%. For the given analyte set equivalent RSDs are demonstrated for all elution volumes. This illustrates data repeatability as presented according to example 4c.

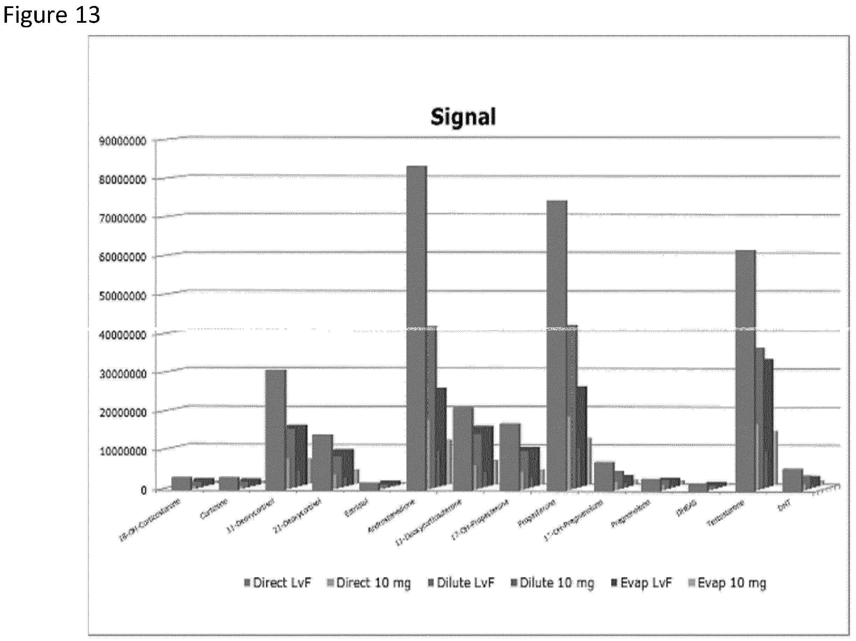

Figure 13 illustrates the analyte peak area performance obtained according to the example 4d, comparing 2 mg LVF column with a traditional 10 mg fixed well plate. Data was compared using direct injection of the elution volume returned from each format, diluted 1:1 or standard procedure of evaporated then reconstituted in equivalent "elution" volume for each format. Data comparing direct injection of the eluent; diluted 1:1, evaporated and reconstituted is presented for 2 mg LVF and 10 mg FWP formats, respectively. More specifically a cut down panel of analytes are ordered from left to right on the x-axis: 18-hydroxycorticosterone, cortisone, 11-deoxycortisol, 21-deoxycortisol, estradiol, androstenedione, 11-deoxycorticosterone, 17-hydroxyprogesterone, progesterone, 17-hydroxypregnenolone, pregnenolone, DHEAS, testosterone, DHT: with peak areas response plotted on the y-axis.. The data demonstrates increased peak areas for the 2 mg LVP plate for each experiment.

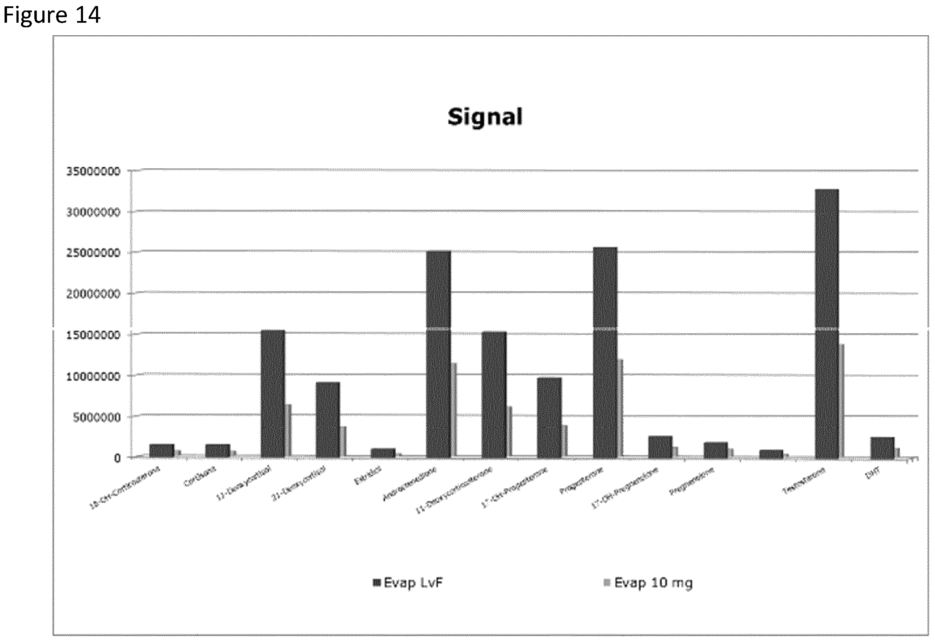

Figure 14 illustrates the analyte peak area performance obtained according to the example 4d, comparing 2 mg LVF column with a traditional 10 mg fixed well plate. Data was compared using evaporated then reconstituted in equivalent "elution" volume for each format as depicted previously in Figure 13. More specifically a cut down panel of analytes are ordered from left to right on the x-axis: 18-hydroxycorticosterone, cortisone, 11-deoxycortisol, 21-deoxycortisol, estradiol, androstenedione, 11-deoxycorticosterone, 17-hydroxyprogesterone, progesterone, 17-hydroxypregnenolone, pregnenolone, DHEAS, testosterone, DHT: with peak areas response plotted on the y-axis.. The data demonstrates increased peak areas for the 2 mg LVP format compared to the traditional 10 mg fixed well plate format.

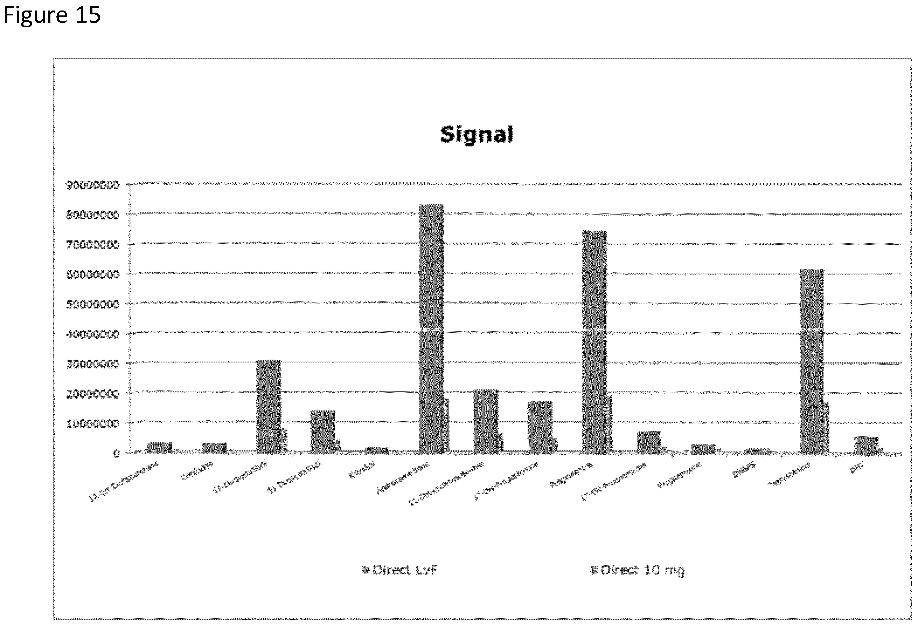

Figure 15 illustrates the analyte peak area performance obtained according to the example 4d, comparing 2 mg LVF column with a traditional 10 mg fixed well plate. Data was compared using direct injection of the elution volume returned from each format as depicted previously in Figure 13. More specifically a cut down panel of analytes are ordered from left to right on the x-axis: 18-hydroxycorticosterone, cortisone, 11-deoxycortisol, 21-deoxycortisol, estradiol, androstenedione, 11-deoxycorticosterone, 17-hydroxyprogesterone, progesterone, 17-hydroxypregnenolone, pregnenolone, DHEAS, testosterone, DHT: with peak areas response plotted on the y-axis.. The data demonstrates increased peak areas for the 2 mg LVP format compared to the traditional 10 mg fixed well plate format.

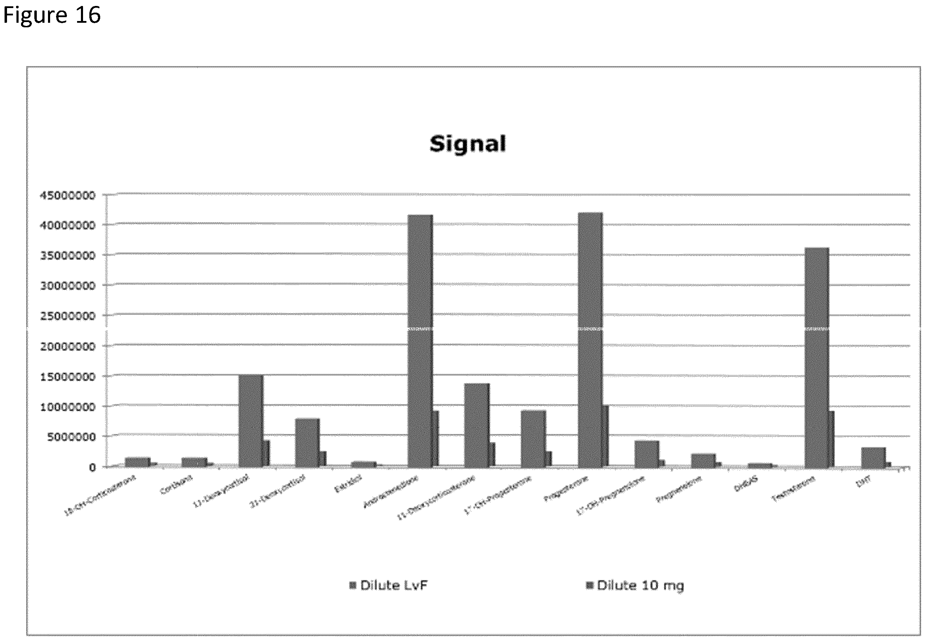

Figure 16 illustrates the analyte peak area performance obtained according to the example 4d, comparing 2 mg LVF column with a traditional 10 mg fixed well plate. Data was compared using the elution volume returned from each format diluted 1:1 with water as depicted previously in Figure 13. More specifically a cut down panel of analytes are ordered from left to right on the x-axis: 18-hydroxycorticosterone, cortisone, 11-deoxycortisol, 21-deoxycortisol, estradiol, androstenedione, 11-deoxycorticosterone, 17-hydroxyprogesterone, progesterone, 17-hydroxypregnenolone, pregnenolone, DHEAS, testosterone, DHT: with peak areas response plotted on the y-axis.. The data demonstrates increased peak areas for the 2 mg LVP format compared to the traditional 10 mg fixed well plate format.

### EXPERIMENTAL

The present examples are provided for illustrative purposes only, and are not to be construed as limiting the invention as defined by the appended claims.

### Columns:

The low volume format (LVF) columns according to the invention used in the examples below were prepared from high purity polypropylene in a shape corresponding to Fig. 1. The column dimensions were as follows: 2 mg.

The frits (denoted screens below) arranged in the columns used herein were all made from nylon in accordance with standard methods, and presented the following properties:
Bottom and top frits:
   25:19 (given as pore diameter (µm): % open)
Filter frit:
   105:52 (given as pore diameter (µm): % open)

The adsorbents (denoted resins below) used in the examples were commercially available from Biotage (https://biotage.com/), unless otherwise indicated. Adsorbent was loaded in the columns between the bottom frit and the top frit until substantially no space was left between the adsorbent and the top frit.

### Example 1: Flow properties of microelution columns according to the invention

### Experimental set up and Conclusion

Low Volume Format (LVF) columns as described in Figure 2, arranged in plates as described in Figure 5 were processed on Biotage^{®} Extrahera^{™} (https://biotage.com/) in triplicate to determine flow characteristics.

A variety of top and bottom screens were investigated based on the particle size of the EVOLUTE ABN 20 µm and 30 µm material.

The shortest processing times and lowest applied pressures were observed using ABN 30 µm resin. For both resins the shortest processing times and lowest pressures were observed using single top '105:52' screens (though the differences were often minimal) and processing times were faster than when performed manually on the pressure+.

### Materials

EVOLUTE ABN 20 µm and 30 µm, 5 µL was provided in PhyNexus PhyTips (2mg) (https://phynexus.com/) wherein a bottom frit, a top frit and a filter frit above the top frit had been arranged as described in the present specification.

Below, the term "LVF" which is an abbreviation for Low Volume Format will be used interchangeably with the term "microelution columns of the invention". When a microelution column of the invention has been arranged as fixed (non-removable) in a base plate for parallel processing, it may also be denoted an "LVF well".

**Table 1: Screen Configuration (pore diameter (µm) : % open)**

| **Top Screen(s)** | **Bottom Screen** |
|---|---|
| 25:19 | 25:19 |
| 105:52 | 25:19 |
| 25:19 & 105:52 | 25:19 |
| 105:52 & 105:52 | 25:19 |

The diameter of the top screen frit was 3.05 mm and the diameter of the bottom screen frit was 2.18 mm. The diameters are the outside diameter and include the column wall thickness of approximately 0.508 mm. To calculate the diameter of the effective frit diameter, 1.02 mm is subtracted from each diameter.

### Methods

Triplicate LVF wells for each particle diameter and screen configuration were populated in row A of a Biotage LVF base plate (Figure 4 and 5).

### Samples

Urine samples obtained from human healthy volunteers were treated in accordance with standard procedures for plasma samples.

LVF wells were processed using the Biotage EVOLUTE ABN on an Extrahera in manual mode. A positive pressure setting of 200 kPa was used for all steps as this was judged to initiate flows when run on a used set of 20 µm tips. The pressure was increased to 500 kPa for 30 seconds prior to the final elution step though this did not result in any additional drops coming off of the tips.

**Table 2: ABN Generic Processing Method**

| **Step** | **Details** |
|---|---|
| Condition | 200 µL MeOH |
| Equilibrate | 200 µL 0.1% HCOOH |
| Load | 200 µL plasma 1:1 1% HCOOH |
| Wash | 200 µL 5% MeOH (aq) |
| Elute | 200 µL MeOH |

Flows were judged by measuring the time from when the pressure head comes down to when the last full drip comes off of each tip measuring the range from the earliest of the three tips to pass the solvent to the last of the three. These times were determined accurately by videoing each step and monitoring each tip individually by reviewing the film. Close-up images from a selection of tips were also taken at various time points. Some solvents were slightly dyed in colour to try and make them more visible though this did result in the colour concentrating on the tip media on occasions.

### Observations

### a) ABN 30 µm, 5 µL PhyTip LVF Extrahera Processing

All of the tips were comfortably processed using a positive pressure of 200 kPa. When viewing all varieties at the same time there was generally little difference of flow from one variety of tip to another however the 30 µm were faster than the corresponding 20 µ variant. When studying individual batches the single screen tips are very slightly faster eluting than the double screen and 105:52 tips slightly faster eluting than the 25:19 equivalents. Even later in the extraction procedure where the differences are maximised the effect it has on flow speeds is unlikely to be significant.

**Table 3: ABN 30µm - Top and double screen options (seconds, 200 kPa)**

| Step | 105:52 + 105.52 | 25:19 + 105:52 | 105:52 | 25:19 |
|---|---|---|---|---|
| Conditioning | 11-13 | 11-15 | 11-12 | 10-13 |
| Equilibration | 12-13 | 15-16 | 12-13 | 12-13 |
| Load | 21-25 | 20-25 | 19-21 | 22-26 |
| Wash | 20-21 | 21-28 | 21-23 | 22-25 |
| Elute | 14-15 | 15-19 | 12-16 | 16-17 |

### b) ABN 20 µm, 5 µL PhyTip LVF Extrahera Processing

All of the tips were comfortably processed using a positive pressure of 200 kPa. When viewing all varieties at the same time there was generally little difference of flow from one variety of tip to another however the 20 µm tips were slower. When studying individual batches the single screen tips are very slightly faster eluting than the double screen and 105:52 tips slightly faster eluting than the 25:19 equivalents. Even later in the extraction procedure where the differences are maximised the effect it has on flow speeds is unlikely to be significant.

**Table 4: ABN 20µm - Top and double screen options (seconds, 200 kPa)**

| Step | 105:52 + 105.52 | 25:19 + 105:52 | 105:52 | 25:19 |
|---|---|---|---|---|
| Conditioning | 15-19 | 17-20 | 13-16 | 15-18 |
| Equilibration | 27-32 | 27-29 | 20-24 | 24-27 |
| Load | 29-36 | 35-38 | 28-32 | 30-33 |
| Wash | 29-34 | 30-34 | 27-31 | 32-41 |
| Elute | 19-24 | 21-24 | 15-17 | 16-23 |

### Example 2: Comparison of microelution columns with commercial product

### Summary

Low Volume Format (LVF) tips and OASIS µElution wells were processed to determine flow characteristics using two types of pre-treated plasma.

Typical flow characteristics were observed using fresh plasma with/without centrifugation and aged plasma with centrifugation.

### Materials

EVOLUTE ABN 30 µm, 5 µL, 105 µm + 25 µm top screens (PTE 93-05-XX)
OASIS HLB µElution 30 µm
WBS plasma #5260 (aged, high precipitation)
WBS plasma #413 (fresh, low precipitation)
(WBS = Welsh Blood Service)

### Methods

An aliquot of each batch of plasma was centrifuged at 6500 x g for 10 minutes. The supernatant was transferred to a new container and any pellet discarded.

An aliquot of each batch of plasma without centrifugation (-C) and with centrifugation (+C) was diluted 1:1 with 1% formic acid.

LVF columns were populated in a Biotage LVF base plate. 200 µL sub-aliquots of each batch of pre-treated plasma (-C/+C) were transferred to duplicate LVF tips (due to numbers available) and triplicate µElution wells.

LVF columns were processed with a Pressure+ 96 positive pressure manifold using the maximum flow (coarse) setting; the µElution plate was processed using the variable flow (fine) setting. Processing pressures and times were recorded.

**Table 5: Processing time**

| **Plasma** | **LVF 30 µm, 5 µL (coarse)** | **µElution 30 µm (fine)** |
|---|---|---|
| #413 +C | 1 min, 28 kPa + 1.5 min, 41 kPa | 2 min, 41 kPa |
| #413 - C | 1 min, 28 kPa + 1.5 min, 41 kPa | 2 min, 41 kPa |
| #5260 +C | 1 min, 28 kPa + 1.5 min, 41 kPa | 2 min, 41 kPa |

Processing of µElution wells was more straightforward, loading completed and flow ceased as expected using the fine setting. Processing LFV tips using the coarse setting resulted in completed tips exceeding the 'bubble point' of the components.

### Example 3: SPE

The present example describes Solid Phase Extraction (SPE) recoveries of a range of analytes obtained in LC-MS performed on samples prepared by SPE using either prior art columns (30 and 10 mg, respectively) or columns according to the present invention (2mg LVF)

This example was set up to show the high recoveries obtained with the microelution columns according to the invention using low elution volumes.

The LVF columns described in the Materials and Methods were used.

The sample was discard human plasma from the Welsh Blood Service, UK .

### Example 3a: LC-MS Analysis of ABN Mix 9

In this example, Mix 9 is an internal test mix for acids, basic and neutral drugs: Acetaminophen (neutral drug) Naltrexone Metoprolol Mianserin (basic drugs) Prednisolone (netural steroid) Ketoprofen Warfarin Sulindac Indomethacin (acidic drugs) for recovery determination of low elution volume SPE plate.

### Solid phase resin: EVOLUTE ABN

### Method

1. Condition: MeOH
2. Equilibrate: 0.1% formic acid aq
3. Load: 5 ng in 200 µL (1:1, plasma : 1% formic acid)
4. Wash: 95/5 H₂O/MeOH
5. Elute: 50 µl MeOH
6. Dry: stream of air
7. Reconstitute: 1mL of mobile phase (80/20 H₂O/MeOH)
8. Analyze Waters Acquity UPLC interfaced to a Premier XE triple quadrupole Mass spectrometer, 10 µL injections
9. Data analysis using internal and external standards

**Table 6**

| Column bed mass | Condition | Equilibrate | Load | Wash | Elute |
|---|---|---|---|---|---|
| 30 mg FWP | 1 mL | 1 mL | 0.2 mL | 1 mL | 0.5 mL |
| 10 mg FWP | 0.5 mL | 0.5 mL | 0.2 mL | 0.5 mL | 0.2 mL |
| 2 mg LVF | 0.5 mL | 0.5 mL | 0.2 mL | 0.1 mL | 2 x 25 µL |

**Table 7: 30 mg Columns FWP**

| Acetaminophen | Naltrexone | Metoprolol | Mianserin | Prednisolone | Ketoprofen | Warfarin | Sulindac | Indomethacin |
|---|---|---|---|---|---|---|---|---|
| (% recoveries) 104.9 | 139.8 | 128.2 | 171.2 | 150.8 | 208.5 | 144.8 | 181.8 | 105.8 |
| RSD 10.1 | 26.1 | 26.4 | 64.8 | 34.2 | 64.4 | 51.7 | 61.9 | 52.3 |

| | | | | | | | | |
|---|---|---|---|---|---|---|---|---|
| 10 mg Columns FWP | | | | | | | | |

| | | | | | | | | |
|---|---|---|---|---|---|---|---|---|
| (% recoveries) 70.2 | 80. | 89.1 | 68.1 | 77.7 | 64.8 | 61.4 | 57.8 | 45.4 |
| RSD 6.3 | 5.1 | 4.8 | 14.5 | 4.1 | 9.2 | 3.8 | 9.2 | 12.7 |
| (% recoveries) 45.3 | 65.3 | 78.6 | 86.1 | 77.0 | 62.1 | 67.8 | 59.7 | 40.0 |
| RSD 12.1 | 11.4 | 9.0 | 14.2 | 7.0 | 11.2 | 9.6 | 10.0 | 26.7 |

| | | | | | | | | |
|---|---|---|---|---|---|---|---|---|
| 2 mg Columns L VF | | | | | | | | |

### Example 3b

The same example 3a with 2 mg LVF except a single aliquot of less than 50 µL is used to elute the analytes. The aliquot is successful in elution of the analyte with a single aliquot of 20, 30, 40 or 45 µl of methanol.

### Example 3c

The same as example 1 with 2 mg LVF except a single aliquot of 25 µL buffer is applied to the top of the plate column with hydrophobic wall and hydrophilic frit. With an hydrophilic wall, the sample, washing solution and eluent are applied to the column with the liquid traveling down the wall of the column and reducing the air gap. Less air is introduced to the column bed as the column is processed.

### Example 3d

The same as example 1 with 2 mg LVF except a single aliquot of 25 µL buffer is applied to top of the plate column with hydrophobic wall and hydrophilic frit where the diameter of the droplet is less than the diameter of the column above the frit. The process prevents the introduction of the air gap into the column as the liquid is introduced into the column.

### Example 3e

The same as example 1 with 2 mg LVF except a single aliquot of 25 µL buffer is applied to the top of the plate column with hydrophobic wall and hydrophilic frit where the droplet touches the frit. The aliquot is applied in 1, 2 or more droplets and flow to cover the top of the column bed frit. The process prevents the introduction of the air gap into the column as the liquid is introduced into the column.

### Example 4 - Microelution columns having a top frit and a bottom frit

The low volume format (LVF) columns having a bottom frit and a top frit (but no filter frit) according to the invention used in the examples below were prepared from high purity polypropylene in a shape corresponding to Fig. 1.

The column dimensions were as follows: 2 mg.

The frits (denoted screens below) arranged in the columns used herein were all made accordance with standard methods, and presented the following properties:

### Frits:

Bottom: 15:10 Nylon (given as pore diameter (µm): % open)
Top: 33: 21 Polyester (given as pore diameter (µm): % open)

The adsorbents (denoted resins below) used in the examples were commercially available from Biotage (https://biotage.com/), unless otherwise indicated. Adsorbent was loaded as a packed bed in the columns between the bottom frit and the top frit allowing slight space between the adsorbent and the top frit according to diameter of top frit.

### Example 4a: SPE

The present example describes Solid Phase Extraction (SPE) recoveries of a range of analytes obtained in LC-MS/MS performed on samples prepared by SPE using either prior art columns (10 mg) or columns according to the present invention (2mg LVF).

This example was set up to show the high recoveries obtained with the microelution columns according to the invention using low elution volumes.

The LVF columns described in the Materials and Methods were used.

The sample was stripped human serum from Golden West Biologicals, USA. Stripped serum was used in this example due to the endogenous nature of the target panel. Analysis compared blank serum (n=1) then serum spiked pre (n=7) and post extraction (n=4) for repeatability.

### Example 4b: LC-MS Analysis of Endogenous Steroid Hormones

In this example, a panel of endogenous steroid hormones: 18-hydroxycorticosterone, cortisone, cortisol, 11-deoxycortisol, corticosterone, 21-deoxycortisol, estradiol, DHEA, estrone, androstenedione, 11-deoxycorticosterone, 17-hydroxyprogesterone, progesterone, 17-hydroxypregnenolone, pregnenolone, testosterone, DHT, for recovery determination of low elution volume SPE plate.

### Solid phase resin: EVOLUTE ABN

Method
1. Condition: MeOH
2. Equilibrate: 0.1% formic acid aq
3. Load: 1 ng in 200 µL (1:1, plasma : 1% formic acid); equivalent to 10ng/mL
4. Wash 1: H₂O
5. Wash 2: 60/40 (v/v) H₂O/MeOH
5. Elute: 20-50 µl MeOH
6. Dry: stream of air
7. Reconstitute: 200 µL of 50/50 H₂O/MeOH
8. Analyze Shimadzu Nexera UHPLC interfaced to an 8060 triple quadrupole Mass spectrometer, 5 µL injections
9. Data analysis using internal and external standards

**Table 1: Processing Volumes**

| | ***10mg FWP Format*** | ***2mg LVF Format*** |
|---|---|---|
| Condition | 500 µL | 100 µL |
| Equilibrate | 500 µL | 100 µL |
| Load | 200 µL | 200 µL |
| Wash 1 | 500 µL | 100 µL |
| Wash 2 | 500 µL | 100 µL |
| Elute | 150 µL | 40 µL |

| | | |
|---|---|---|
| FWP - Fixed Wells Plates | | |

**Table 2: Results 10mg FWP vs 2mg LVF**

| | ***10mg FWP Format*** | | ***2mg LVF Format*** | |
|---|---|---|---|---|
| **Analyte** | **Recovery %** | **RSD %** | **Recovery %** | **RSD %** |
| 18-hydroxycorticosterone | 81.26 | 4.21 | 86.29 | 2.24 |
| cortisone | 80.74 | 2.97 | 86.41 | 1.74 |
| cortisol | 68.04 | 4.77 | 82.31 | 3.83 |
| 11-deoxycortisol | 84.35 | 2.95 | 84.51 | 3.10 |
| corticosterone | 84.06 | 3.46 | 86.38 | 3.15 |
| 21-deoxycortisol | 85.71 | 3.66 | 86.75 | 2.59 |
| estradiol | 79.85 | 5.84 | 85.12 | 4.08 |
| DHEA | 64.76 | 7.72 | 70.05 | 6.41 |
| estrone | 62.47 | 7.13 | 71.22 | 6.54 |
| androstenedione | 67.76 | 7.18 | 71.99 | 6.45 |
| 11-deoxycorticosterone | 76.66 | 5.35 | 78.75 | 4.19 |
| 17-hydroxyprogesterone | 76.48 | 5.16 | 79.89 | 4.38 |
| progesterone | 64.01 | 8.20 | 65.92 | 6.05 |
| 17-hydroxypregnenolone | 61.33 | 9.47 | 63.48 | 5.58 |
| pregnenolone | 65.73 | 4.83 | 72.86 | 4.08 |
| testosterone | 80.21 | 4.65 | 81.42 | 3.56 |
| DHT | 78.27 | 5.63 | 77.98 | 5.21 |

Recovery data and RSDs are presented in Figures 9 and 10, respectively.

### Example 4c

The same example 4b with 2 mg LVF except a single aliquot of less than 50 µL is used to elute the analytes. Elution of the analyte is successful with a single aliquot of solvent with 20, 30, 40 or 50 µl of methanol.

| | ***Recovery %*** | | | |
|---|---|---|---|---|
| **Analyte** | **20 µL** | **30 µL** | **40 µL** | **50 µL** |
| 18-hydroxycorticosterone | 67.77 | 89.66 | 81.46 | 85.31 |
| cortisone | 67.87 | 90.75 | 82.97 | 86.81 |
| cortisol | 82.30 | 88.32 | 81.19 | 82.19 |
| 11-deoxycortisol | 88.41 | 85.78 | 103.17 | 109.59 |
| corticosterone | 71.11 | 86.44 | 81.65 | 86.27 |
| 21-deoxycortisol | 68.08 | 86.14 | 82.72 | 85.56 |
| estradiol | 53.70 | 72.27 | 72.71 | 72.92 |
| DHEA | 39.41 | 55.99 | 59.5 | 59.46 |
| estrone | 38.52 | 56.60 | 52.23 | 60.12 |
| androstenedione | 67.42 | 69.37 | 63.49 | 68.12 |
| 11-deoxycorticosterone | 53.90 | 77.17 | 67.06 | 76.06 |
| 17-hydroxyprogesterone | 55.89 | 79.68 | 68.55 | 75.54 |
| progesterone | 38.49 | 66.65 | 50.95 | 58.08 |
| 17-hydroxypregnenolone | 38.63 | 65.01 | 48.77 | 57.57 |
| pregnenolone | 39.15 | 78.01 | 55.80 | 68.03 |
| testosterone | 58.39 | 83.12 | 73.90 | 78.52 |
| DHT | 53.01 | 80.86 | 67.97 | 76.37 |

| | ***RSD %*** | | | |
|---|---|---|---|---|
| **Analyte** | **20 µL** | **30 µL** | **40 µL** | **50 µL** |
| 18-hydroxycorticosterone | 5.34 | 3.71 | 6.62 | 3.68 |
| cortisone | 6.59 | 3.88 | 6.88 | 4.13 |
| cortisol | 9.52 | 7.52 | 8.76 | 3.71 |
| 11-deoxycortisol | 6.51 | 3.60 | 7.58 | 4.22 |
| corticosterone | 5.31 | 11.19 | 6.41 | 7.01 |
| 21-deoxycortisol | 5.55 | 3.86 | 7.09 | 3.63 |
| estradiol | 5.27 | 6.29 | 7.15 | 9.77 |
| DHEA | 7.15 | 8.53 | 11.78 | 11.54 |
| estrone | 10.93 | 8.46 | 12.03 | 10.81 |
| androstenedione | 4.86 | 7.00 | 6.96 | 7.82 |
| 11-deoxycorticosterone | 5.10 | 6.42 | 7.98 | 6.13 |
| 17-hydroxyprogesterone | 6.91 | 6.41 | 7.84 | 4.96 |
| progesterone | 5.51 | 8.37 | 9.69 | 11.45 |
| 17-hydroxypregnenolone | 8.63 | 8.44 | 10.53 | 10.72 |
| pregnenolone | 12.66 | 5.67 | 6.93 | 6.45 |
| testosterone | 5.74 | 5.63 | 7.77 | 5.35 |
| DHT | 3.50 | 8.70 | 10.13 | 7.26 |

The results of using the very small elution volumes enabled by the present invention are presented as steroid panels in Figure 10 and 11, respectively.

### Beta Example 4d

The same example 4b with 2 mg LVF using a single aliquot of 30 µL to elute the analytes compared with 150 µL for the 10 mg FWP. In figures 13-16, we compare analyte peak areas returned for both formats: using standard methodology of evaporation followed by reconstitution in 30 or 150 µL, respectively; dilution of the extract 1:1 with H₂O prior to injection; direct injection of the MeOH eluate.

## Claims

1. A microelution column (1) configured for top-down flow, which comprises a column body (2) including a bottom frit (3) and a top frit (4), wherein the column body includes an adsorbent (5) arranged between the bottom frit (3) and the top frit (4), and each the frit(s) has a pore volume of about 0.2 µL,
**characterized in that** the pore diameter of the bottom frit (3) is smaller than that of the top frit (4).

2. A column according to claim 1, wherein the top frit, and optionally the bottom frit, are each made from one single material, which presents substantially uniform flow properties.

3. A column according any one of the preceding claims, wherein at least the bottom frit (3) is made from a woven or non-woven mesh material, such as a mesh material selected from the group consisting of nylon and polyester.

4. A column according to any one of the preceding claims, which has been provided with means to receive a removable filter frit (6) arranged above the top frit (4).

5. A column according to claim 4, wherein a gap between the filter frit (6) and the top frit (4) is less than 10 mm.

6. A column according to claim 4 or 5, wherein the column comprises a removable filter frit (6), wherein the dead volume of the removable filter frit (6) is less than about 1µL.

7. A column according to any one of the preceding claims, wherein the diameter of a top end of the column body (2) is greater than the diameter of a bottom end of the column body (2).

8. A column according to claim 7, wherein the column body (2) is substantially tapered from said top end to said bottom end.

9. A column according to any one of the preceding claims wherein the adsorbent (5) has been provided in substantially all of the space between the bottom frit (3) and the top frit (4).

10. A plate (10) for parallel processing of samples, which includes a plurality of positions (11) into which one or more columns according to any one of claims 1-9 have been arranged.

11. A plate according to claim 10, wherein each column body (2) has been provided with means that prevents its movement in the Y-direction.

12. A column according to claim 11, wherein said means comprises a ridge (7) adapted to rest on means (12) in the form of a protrusion arranged in said plate (10).

13. A plate according to claim 12, wherein each column body (2) has been provided with means that prevents its movement in the X-direction.

14. A column according to claim 13, wherein said means is a collar (8) arranged at the upper part of each column body (2) which includes at least two opposing flat surfaces (9).

15. A method of preparing a sample for subsequent analysis, wherein at least one sample having a volume in the range of about 100-400 µL is applied to a column according to any one of claims 1-9.

16. A method according to claim 15, wherein the sample is applied to a column (1) loaded with adsorbent (5), and elution is performed in a subsequent step by applying an eluent having a volume in the range of about 10-50 µL.

17. A method according to claim 15 or 16, wherein the sample is applied to the top frit (4), or the filter frit (6).

## Patentansprüche

1. Mikroelutionssäule (1), die für einen Fluss von oben nach unten konfiguriert ist, die einen Säulenkörper (2) umfasst, der eine untere Fritte (3) und eine obere Fritte (4) beinhaltet, wobei der Säulenkörper ein Adsorptionsmittel (5) beinhaltet, das zwischen der unteren Fritte (3) und der oberen Fritte (4) angeordnet ist, und jede der Fritte(n) ein Porenvolumen von etwa 0,2 µl aufweist,
**dadurch gekennzeichnet, dass** der Porendurchmesser der unteren Fritte (3) kleiner ist als der der oberen Fritte (4).

2. Säule nach Anspruch 1, wobei die obere Fritte und optional die untere Fritte jeweils aus einem einzigen Material hergestellt sind, das im Wesentlichen gleichmäßige Fließeigenschaften aufweist.

3. Säule nach einem der vorhergehenden Ansprüche, wobei mindestens die untere Fritte (3) aus einem gewebten oder nicht gewebten Maschenmaterial hergestellt ist, wie etwa einem Maschenmaterial, das aus der Gruppe bestehend aus Nylon und Polyester ausgewählt ist.

4. Säule nach einem der vorhergehenden Ansprüche, die mit einem Hilfsmittel zum Aufnehmen einer herausnehmbaren Filterfritte (6) bereitgestellt ist, die oberhalb der oberen Fritte (4) angeordnet ist.

5. Säule nach Anspruch 4, wobei ein Abstand zwischen der Filterfritte (6) und der oberen Fritte (4) weniger als 10 mm beträgt.

6. Säule nach Anspruch 4 oder 5, wobei die Säule eine herausnehmbare Filterfritte (6) umfasst, wobei das Totvolumen der herausnehmbaren Filterfritte (6) weniger als etwa 1 µl beträgt.

7. Säule nach einem der vorhergehenden Ansprüche, wobei der Durchmesser eines oberen Endes des Säulenkörpers (2) größer ist als der Durchmesser eines unteren Endes des Säulenkörpers (2).

8. Säule nach Anspruch 7, wobei der Säulenkörper (2) vom oberen Ende zum unteren Ende im Wesentlichen verjüngt ist.

9. Säule nach einem der vorhergehenden Ansprüche, wobei das Adsorptionsmittel (5) im Wesentlichen im gesamten Raum zwischen der unteren Fritte (3) und der oberen Fritte (4) bereitgestellt ist.

10. Platte (10) zur parallelen Verarbeitung von Proben, die eine Vielzahl von Positionen (11) beinhaltet, in denen eine oder mehrere Säulen nach einem der Ansprüche 1-9 angeordnet sind.

11. Platte nach Anspruch 10, wobei jeder Säulenkörper (2) mit einem Hilfsmittel bereitgestellt ist, das seine Bewegung in die Y-Richtung verhindert.

12. Säule nach Anspruch 11, wobei das Hilfsmittel einen Steg (7) umfasst, der dazu ausgebildet ist, auf einem in der Platte (10) angeordneten Hilfsmittel (12) in Form eines Vorsprungs aufzuliegen.

13. Platte nach Anspruch 12, wobei jeder Säulenkörper (2) mit einem Hilfsmittel bereitgestellt ist, das seine Bewegung in die X-Richtung verhindert.

14. Säule nach Anspruch 13, wobei das Hilfsmittel ein Kragen (8) ist, der am oberen Teil jedes Säulenkörpers (2) angeordnet ist und mindestens zwei gegenüberliegende flache Flächen (9) aufweist.

15. Verfahren zum Vorbereiten einer Probe für die nachfolgende Analyse, wobei mindestens eine Probe, die ein Volumen im Bereich von etwa 100-400 µl aufweist, auf eine Säule nach einem der Ansprüche 1-9 aufgetragen wird.

16. Verfahren nach Anspruch 15, wobei die Probe auf eine mit einem Adsorptionsmittel (5) beladene Säule (1) aufgetragen wird und die Elution in einem nachfolgenden Schritt durch Auftragen eines Elutionsmittels, das ein Volumen im Bereich von etwa 10-50 µl aufweist, durchgeführt wird.

17. Verfahren nach Anspruch 15 oder 16, wobei die Probe auf die obere Fritte (4) oder die Filterfritte (6) aufgetragen wird.

## Revendications

1. Colonne de microélution (1) configurée pour un écoulement descendant, qui comprend un corps de colonne (2) comportant une fritte inférieure (3) et une fritte supérieure (4), le corps de colonne comportant un adsorbant (5) disposé entre la fritte inférieure (3) et la fritte supérieure (4), et chacune des frittes ayant un volume de pores d'environ 0,2 µL, **caractérisée en ce que** le diamètre de pores de la fritte inférieure (3) est inférieur à celui de la fritte supérieure (4).

2. Colonne selon la revendication 1, dans laquelle la fritte supérieure, et éventuellement la fritte inférieure, sont chacune faites à partir d'un seul matériau, qui présente des propriétés d'écoulement sensiblement uniformes.

3. Colonne selon l'une quelconque des revendications précédentes, dans laquelle au moins la fritte inférieure (3) est faite à partir d'un matériau en maille tissé ou non tissé, tel qu'un matériau en maille choisi dans le groupe constitué du nylon et du polyester.

4. Colonne selon l'une quelconque des revendications précédentes, qui a été pourvue d'un moyen pour recevoir une fritte de filtration amovible (6) disposée au-dessus de la fritte supérieure (4).

5. Colonne selon la revendication 4, dans laquelle un espace entre la fritte de filtration (6) et la fritte supérieure (4) est inférieur à 10 mm.

6. Colonne selon la revendication 4 ou 5, la colonne comprenant une fritte de filtration amovible (6), dans laquelle le volume mort de la fritte de filtration amovible (6) est inférieur à environ 1 µL.

7. Colonne selon l'une quelconque des revendications précédentes, dans laquelle le diamètre d'une extrémité supérieure du corps de colonne (2) est supérieur au diamètre d'une extrémité inférieure du corps de colonne (2).

8. Colonne selon la revendication 7, dans laquelle le corps de colonne (2) est sensiblement conique de ladite extrémité supérieure à ladite extrémité inférieure.

9. Colonne selon l'une quelconque des revendications précédentes, dans laquelle l'adsorbant (5) a été prévu dans sensiblement tout l'espace entre la fritte inférieure (3) et la fritte supérieure (4).

10. Plaque (10) pour le traitement parallèle d'échantillons, qui comprend une pluralité de positions (11) dans lesquelles une ou plusieurs colonnes selon l'une quelconque des revendications 1 à 9 ont été disposées.

11. Plaque selon la revendication 10, dans laquelle chaque corps de colonne (2) a été pourvu d'un moyen qui empêche son mouvement dans la direction Y.

12. Colonne selon la revendication 11, dans laquelle ledit moyen comprend une arête (7) adaptée pour reposer sur un moyen (12) en forme de saillie agencé dans ladite plaque (10).

13. Plaque selon la revendication 12, dans laquelle chaque corps de colonne (2) a été pourvu d'un moyen qui empêche son mouvement dans la direction X.

14. Colonne selon la revendication 13, dans laquelle ledit moyen est un collier (8) disposé à la partie supérieure de chaque corps de colonne (2) qui comporte au moins deux surfaces planes (9) opposées.

15. Procédé de préparation d'un échantillon pour une analyse ultérieure, dans lequel au moins un échantillon ayant un volume dans la plage d'environ 100 à 400 µL est appliqué à une colonne selon l'une quelconque des revendications 1 à 9.

16. Procédé selon la revendication 15, dans lequel l'échantillon est appliqué à une colonne (1) chargée d'adsorbant (5) et l'élution est effectuée à une étape ultérieure en appliquant un éluant ayant un volume dans la plage d'environ 10 à 50 µL.

17. Procédé selon la revendication 15 ou 16, dans lequel l'échantillon est appliqué sur la fritte supérieure (4) ou la fritte de filtration (6).
